# EUROPÄISCHE PATENTSCHRIFT

(11) **EP 0 892 834 B1**
(45) Veröffentlichungstag und Bekanntmachung des Hinweises auf die Patenterteilung: **05.07.2000**
(21) Anmeldenummer: 97918124.5
(22) Anmeldetag: 09.04.1997
(51) Int. Cl.: C09D 17/00, C09C 1/24, C09C 3/12

(54) **VERFAHREN ZUR HERSTELLUNG AGGLOMERATFREIER NANOSKALIGER EISENOXIDTEILCHEN MIT HYDROLYSEBESTÄNDIGEM ÜBERZUG**
PROCESS FOR PREPARING AGGLOMERATE-FREE NANOSCALAR IRON OXIDE PARTICLES WITH A HYDROLYSIS-RESISTANT COATING
PROCEDE DE PREPARATION DE PARTICULES D'OXYDE DE FER EXEMPTE D'AGGLOMERATS DE L'ORDRE DU NANOMETRE, A REVETEMENT RESISTANT A L'HYDROLYSE

(30) Priorität: 10.04.1996 DE 19614136
(43) Veröffentlichungstag der Anmeldung: 27.01.1999
(73) Patentinhaber: INSTITUT FÜR NEUE MATERIALIEN gemeinnützige GmbH, 66123 Saarbrücken (DE)
(72) Erfinder: LESNIAK, Christoph, D-66111 Saarbrücken (DE); SCHIESTEL, THOMAS,, 66121 Saarbrücken (DE); NASS, Rüdiger, D-66292 Riegelsberg (DE); SCHMIDT, Helmut, D-66130 Saarbrücken (DE)
(74) Vertreter: Barz, Peter, Dr.
(86) Internationale Anmeldenummer: EP9701758
(87) Internationale Veröffentlichungsnummer: WO9738058

(56) Entgegenhaltungen:
- EP-A- 0 688 834
- DE-A- 2 543 962
- DATABASE WPI Week 9443 Derwent Publications Ltd., London, GB; AN 94-346580 XP002038079 & JP 06 270 155 A (SEKISUI CHEM. IND. CO.) , 27.September 1994
- DATABASE WPI Week 9347 Derwent Publications Ltd., London, GB; AN 93-373718 XP002038080 & JP 05 277 355 A (TODA KOGYO CORP.) , 26.Oktober 1993

## Beschreibung

Die vorliegende Erfindung betrifft ein Verfahren zur Herstellung agglomeratfreier nanoskaliger Eisenoxidteilchen, d.h. von Eisenoxidteilchen mit einer Teilchengröße (einem mittleren Teilchendurchmesser) der Primärteilchen von nicht mehr als 100 nm, vorzugsweise nicht mehr als 40 nm und insbesondere nicht mehr als 30 nm, die einen sehr hydrolysebeständigen Überzug auf Silan-Basis aufweisen (Core-Shell-Struktur).

Insbesondere zur Herstellung von superparamagnetischen Eisenoxidteilchen werden nanoskalige Teilchen üblicherweise über einen Präzipitationsprozeß hergestellt und anschließend wird über sogenannte Oberflächenmodifikatoren versucht, ein Zusammenwachsen der Primärteilchen zu verhindern (Superparamagnetismus setzt eine Teilchengröße von maximal etwa 30 nm voraus) bzw. bereits gebildete Agglomerate aufzubrechen und die so gebildeten Primärteilchen an der Reagglomeration zu hindern. Wie der Literatur zu entnehmen ist, wird mit der alleinigen Oberflächenmodifikation, z.B. mit funktionellen Silanen, nur ein mäßig deagglomeriertes Produkt erzielt. Dies macht eine starke Bindung zwischen nanoskaligen Primärteilchen wahrscheinlich, die durch den Oberflächenmodifikator nicht aufgebrochen wird. Auch der zusätzliche Eintrag von Energie über Ultraschall, wie er bereits in der Literatur beschrieben wurde, ändert daran nichts Grundsätzliches.

Andererseits ist die Verwendung von funktionellen Silanen, d.h. Silanen, die zum einen über hydrolysierbare bzw. kondensierbare Gruppen (z.B. Alkoxygruppen) verfügen, über die sowohl eine Anbindung des Silans an die Oberfläche der Metalloxidteilchen als auch eine Kondensation von bereits an der Oberfläche gebundenen Silanmolekülen untereinander unter Ausbildung von Si-O-Si-Bindungen stattfinden kann, und zum anderen an nicht hydrolysierbare Kohlenwasserstoffgruppen gebundene funktionelle Gruppen aufweisen, über die nach erfolgter Beschichtung der Metalloxidteilchen eine Anbindung vielfältiger Spezies (z.B. von Biomolekülen) an die Teilchen erfolgen kann, als Oberflächenmodifikator jedoch aus den gerade genannten Gründen sehr erwünscht, vorausgesetzt, es kann ein Weg gefunden werden, auf dem im Zuge der Oberflächenmodifizierung (Beschichtung) Agglomerate in die sie aufbauenden Primärteilchen zerlegt und die letzteren stabil mit einem Überzug versehen werden können, der sich auch unter ungünstigen Bedingungen nicht wieder von der Oberfläche der Teilchen löst und sie so zuverlässig an einer Agglomeration hindert.

Monomere bzw. oligomere, an die Oberfläche von Metalloxidteilchen gebundene Silane sind jedoch ganz allgemein sehr hydrolyseempfindlich. Insbesondere dann, wenn das als Oberflächenmodifikator eingesetzte funktionelle Silan über funktionelle Gruppen verfügt, die eine hydrolytische Spaltung der (ohnehin relativ schwachen) Metall-O-Si-Bindung katalysieren können, wie dies z.B. bei Aminosilanen der Fall ist, wird dieses Problem noch verstärkt, so daß sich die bereits auf dem Primärteilchen befindlichen Silan-Spezies schon unter sehr milden Bedingungen (durch Hydrolyse) wieder von der Teilchenoberfläche lösen und so ein (zumindest teilweise) unbeschichtetes Primärteilchen zurücklassen, das mit anderen derartigen Teilchen ein Agglomerat bilden kann und in aller Regel auch bilden wird, da nanoskalige Teilchen ganz allgemein eine starke Tendenz zur Agglomeratbildung zeigen, wenn sie nicht durch geeignete Maßnahmen daran gehindert werden.

In diesem Zusammenhang sei darauf hingewiesen, daß Agglomerate, selbst wenn sich ihre Abmessungen im gewünschten bzw. noch akzeptablen (nanoskaligen) Bereich bewegen, aufgrund ihrer unregelmäßigen Gestalt (im Gegensatz dazu sind Primärteilchen im wesentlichen kugelförmig) und ihrer Anfälligkeit gegenüber mechanischer Beanspruchung (Zerfall in kleinere Agglomerate und/oder Primärteilchen) für viele Anwendungen ein Problem darstellen. Dies gilt selbst für (stabil) beschichtete Agglomerate, da sie bei ihrem eventuellen Zerfall kleinere Agglomerate und/oder Primärteilchen zurücklassen, die nicht oder nur teilweise beschichtet sind und somit zur Bildung neuer (gegebenenfalls sogar größerer) Agglomerate Anlaß geben können.

Der vorliegenden Erfindung lag somit die Aufgabe zugrunde, ein Verfahren zur Herstellung von (im wesentlichen) agglomeratfreien nanoskaligen Eisenoxidteilchen (insbesondere superparamagnetischen Eisenoxidteilchen) bereitzustellen, mit dem es nicht nur gelingt, bereits vorhandene Primärteilchen-Agglomerate effizient zu zerschlagen, sondern das auch zu Primärteilchen führt, die durch einen hydrolysebeständigen Überzug auf funktioneller Silan-Basis (insbesondere Aminosilan-Basis) zuverlässig an einer (Re-)Agglomeration gehindert sind.

Erfindungsgemäß wurde überraschenderweise gefunden, daß die obige Aufgabe gelöst werden kann durch ein Verfahren zur Herstellung einer (im wesentlichen) agglomeratfreien Suspension von stabil beschichteten nanoskaligen Eisenoxidteilchen, das die folgenden Stufen in der angegebenen Reihenfolge umfaßt:
(1) Bereitstellung einer wäßrigen Suspension von nanoskaligen Eisenoxidteilchen, die teilweise oder vollständig in Form von Agglomeraten vorliegen;
(2) Zugabe (i) eines Trialkoxysilans, das über eine direkt an Si gebundene Kohlenwasserstoffgruppe verfügt, an die mindestens eine Amino-, Carboxyl-, Epoxy-, Mercapto-, Cyano-, Hydroxy- und/oder (Meth)acrylgruppe gebunden ist, und (ii) eines mit Wasser mischbaren polaren organischen Lösungsmittels, dessen Siedepunkt mindestens 10°C höher ist als derjenige von Wasser;
(3) Behandlung der resultierenden Suspension mit Ultraschall, bis mindestens 70% der vorhandenen Teilchen im Bereich ± 20% des mittleren Teilchendurchmessers liegen;
(4) destillative Entfernung des Wassers unter Ultraschalleinwirkung; und
(5) Abtrennung der nicht aufgebrochenen Agglomerate.

Vorzugsweise schließt sich an die obige Stufe (5) als Stufe (6) eine Entfernung von Salzen aus der von Agglomeraten befreiten (im wesentlichen nicht-wäßrigen) Suspension an.

Erfindungsgemäß wurde insbesondere gefunden, daß die für die stabile Beschichtung der (Primär-) Teilchen erforderliche Polykondensation der eingesetzten Silan-Spezies auf der Teilchenoberfläche unter den obigen Bedingungen effizient erzielt werden kann.

Bei den erfindungsgemäß eingesetzten Eisenoxidteilchen handelt es sich üblicherweise um solche, die neben Eisenionen gegebenenfalls auch andere (vorzugsweise zweiwertige) Metallionen, vorzugsweise von Metallen aus der Gruppe Zn, Cu, Co, Ni und/ oder Mn, enthalten können, wobei der Gehalt an diesen Metallen vorzugsweise 70 und insbesondere 35 Metallatom-% nicht übersteigt. Es können aber auch andere als die obigen Metalle in den Eisenoxidteilchen vorhanden sein, z.B. Erdalkalimetalle wie Ca und Mg. Bevorzugt sind die Eisenoxidteilchen jedoch reine Eisenoxidteilchen und insbesondere solche, die sowohl Fe(III) als auch Fe(II) enthalten, wobei das Verhältnis Fe(II)/Fe(III) vorzugsweise 1/1 bis 1/3 beträgt. Superparamagnetische Eisenoxidteilchen werden besonders bevorzugt.

Im folgenden werden die obigen Stufen des erfindungsgemäßen Verfahrens detaillierter beschrieben.

### Stufe (1)

In Stufe (1) wird eine wäßrige Suspension von nanoskaligen Eisenoxidteilchen, die teilweise oder vollständig in Form von Agglomeraten vorliegen, hergestellt. Diese Suspension weist normalerweise einen Feststoffgehalt von 1 bis 30, vorzugsweise 2 bis 20 und besonders bevorzugt 3 bis 10 Gew.-% auf und ihr pH-Wert ist in der Regel leicht sauer bis neutral, z.B. pH 4,5 bis 7.

Die Herkunft der agglomerierten nanoskaligen Eisenoxidteilchen ist nicht von Bedeutung, meistens werden sie jedoch aus einem Fällungsverfahren stammen, wie es weiter unten anhand einer bevorzugten Ausführungsform beschrieben ist. Es können aber auch z.B. in einer Mikroemulsion hergestellte Eisenoxidteilchen als Ausgangsmaterialien für das erfindungsgemäße Verfahren eingesetzt werden.

Schließlich sei noch angemerkt, daß die wäßrige Suspension selbstverständlich auch (in Wasser lösliche) Spezies enthalten kann, die aus vorausgegangenen Stufen der Eisenoxidherstellung stammen, solange diese das erfindungsgemäße Verfahren nicht beeinträchtigen, d.h. insbesondere die Anbindung des Silans an die Teilchenoberfläche und die Kondensation zwischen Silanmolekülen nicht ver- bzw. behindern. Derartige Spezies sind z.B. von anorganischen und organischen Säuren und Basen, Oxidationsmitteln etc. abgeleitete Ionen.

### Stufe (2)

In Stufe (2) werden der obigen wäßrigen Suspension von Eisenoxidteilchen zum einen ein bestimmtes Trialkoxysilan und zum anderen ein bestimmtes mit Wasser mischbares polares organisches Lösungsmittel zugesetzt, wobei die Zugabe gleichzeitig oder nacheinander in beliebiger Reihenfolge erfolgen kann. Vorzugsweise wird zuerst das Silan zugegeben.

Bei den einsetzbaren Trialkoxysilanen handelt es sich vorzugsweise um solche, in denen die Alkoxygruppen identisch sind und 1 bis 4 Kohlenstoffatome aufweisen. Besonders bevorzugt sind Trimethoxy- und Triethoxysilane. Die vierte an das Silicium gebundene Gruppe ist eine Kohlenwasserstoffgruppe, die vorzugsweise über 2 bis 20, insbesondere 3 bis 10 Kohlenstoffatome verfügt. Besonders bevorzugt handelt es sich hierbei um eine (cyclo)aliphatische Gruppe, die durch ein oder mehrere Gruppen -O- und/oder -NR- (R = H oder C₁₋₄-Alkyl) unterbrochen sein kann. Weiter kann sie auch eine oder mehrere Kohlenstoff-Kohlenstoff-Doppel- oder -Dreifachbindungen umfassen. Diese Gruppe ist über eine Si-C-Bindung an das Siliciumatom geknüpft. Weiter muß diese Kohlenwasserstoffgruppe über mindestens eine Amino-, Carboxyl-, Epoxy-, Mercapto-, Cyano-, Hydroxy- und/oder (Meth)acrylgruppe verfügen, wobei diese Gruppen auch Derivate einschließen sollen (z.B. Ester, Anhydrid und Säurehalogenid im Fall von Carboxyl und Mono- und Dialkylamino sowei Trialkylammonium im Fall von Amino). Selbstverständlich können auch zwei oder mehr unterschiedliche funktionelle Gruppen an eine derartige Kohlenwasserstoffgruppe gebunden sein. Erfindungsgemäß bevorzugt ist der Einsatz von Trialkoxysilan mit mindestens einer Aminogruppe (im folgenden als Aminosilane bezeichnet). Konkrete Beispiele für derartige Aminosilane sind 3-Aminopropyltriethoxysilan, N-Aminoethyl-3-aminopropyltrimethoxysilan,Trimethoxysilylpropyldiethylentriamin und N-(6-Aminohexyl)-3-aminopropyltrimethoxysilan.

Im Fall der Verwendung von Aminosilanen ist zu berücksichtigen, daß in diesem Fall in der Regel der Suspension soviel Säure zugegeben werden muß, daß ein deutlich saurer pH-Wert erreicht wird (im Bereich von 1 bis 5, vorzugsweise 2 bis 4). Eine für diesen Zweck besonders bevorzugte Säure ist Eisessig. Beim Einsatz von Silanen ohne Aminogruppen kann auf den Zusatz von Säuren verzichtet werden, obgleich in manchen Fällen ein derartiger Zusatz ebenfalls günstig sein kann.

Selbstverständlich können auch zwei oder mehr Trialkoxysilane mit (gegebenenfalls) unterschiedlichen funktionellen Gruppen eingesetzt werden. Die Zugabemenge an Trialkoxysilan beträgt vorzugsweise 40 bis 120, insbesondere 60 bis 100 Gewichts-% (bezogen auf Eisenoxid), wobei die besten Ergebnisse in der Regel mit 75 bis 85 Gewichts-% Silan erhalten werden. Zu hohe Gehalte an Silan führen zu einer Quervernetzung der Eisenoxidteilchen und damit zu größeren Teilchendurchmessern, während zu geringe Gehalte eine unvollständige Beschichtung der einzelnen Teilchen und damit eine weniger stabile Suspension nach sich ziehen.

Zusätzlich zu den oben aufgeführten Silanen können auch Tetraalkoxysilane der Suspension beigemischt werden. Für diesen Zweck bevorzugte Silane sind Tetramethoxysilan und Tetraethoxysilan. Das Molverhältnis funktionelles Trialkoxysilan zu Tetraalkoxysilan liegt hierbei vorzugsweise im Bereich von 1:0,05 bis 1:10, insbesondere 1:0,1 bis 1:5 und besonders bevorzugt 1:0,5 bis 1:2. Der Zusatz von Tetraalkoxysilan ist besonders bei sterisch anspruchsvolleren Trialkoxysilanen zur Ausbildung eines Überzugs empfehlenswert. Außerdem läßt sich dadurch die Dicke des Überzugs einstellen.

Neben der Silan-Komponente wird der Eisenoxid-Suspension auch ein mit Wasser mischbares polares organisches Lösungsmittel, dessen Siedepunkt mindestens 10°C, vorzugsweise mindestens 15°C und insbesondere mindestens 20°C höher liegt als derjenige von Wasser, zugesetzt.

Im allgemeinen handelt es sich bei dem polaren organischen Lösungsmittel um ein solches, das über mindestens eine, vorzugsweise mindestens zwei, an Kohlenstoffatome gebundene Hydroxygruppen verfügt. Beispiele hierfür sind Ethylenglycol, Propylenglycol, Glycerin, Trimethylolpropan und Diethylenglycol. Besonders bevorzugt werden Ethylenglycol und Glycerin.

Das Gewichtsverhältnis von Wasser zu polarem organischen Lösungsmittel kann in einem weiten Bereich variiert werden. Im allgemeinen beträgt dieses Verhältnis 1:0,5 bis 1:100, insbesondere 1:1 bis 1:10 und besonders bevorzugt 1:1 bis 1:2. Wichtig ist, daß im System genügend Wasser verbleibt, um die Alkoxygruppen der Silan-Komponente(n) zu hydrolysieren. Sind an der direkt an das Silicium gebundenen Kohlenwasserstoffgruppe des Silans weitere hydrolyseempfindliche Gruppen vorhanden (z.B. Ester- und/oder Anhydridgruppen), kann es sogar notwendig sein, zunächst das Wasser aus der Suspension zu entfernen (z.B. durch Destillation unter vermindertem Druck) und nach Zugabe des polaren organischen Lösungsmittels (zwecks Aufrechterhaltung einer Suspension) das Silan und anschließend die für die Hydrolyse der vorhandenen Alkoxysilangruppen erforderliche Wassermenge zuzusetzen (die Alkoxysilangruppen werden bevorzugt hydrolysiert).

### Stufe (3)

Nachdem der Eisenoxid-Suspension die Silan-Komponente und das polare organische Lösungsmittel zugesetzt worden sind, wird die Suspension einer Ultraschallbehandlung unterzogen, bis mindestens 70%, vorzugsweise mindestens 75% und besonders bevorzugt mindestens 80%, der vorhandenen Teiclhen im Bereich von ± 20% des mittleren Teilchendurchmessers liegen. Die entsprechende Bestimmung der Partikelgrößenverteilung erfolgt mittels eines UPA (Ultrafine Particle Analyzer) durch Laser Light Back Scattering. Eine Ultraschallbehandlung vor Zusatz der Silan-Komponente und/oder des polaren organischen Lösungsmittels ist zwar ebenfalls möglich und führt ebenfalls zur Zerschlagung der Agglomerate, ist jedoch wenig sinnvoll, da in Abwesenheit der obigen Zusatzstoffe eine Reagglomeration stattfinden kann. Im Gegensatz dazu werden in Anwesenheit der obigen Zusätze die aus den Agglomeraten freigesetzten Primärpartikel oberflächenbeschichtet und so an einer Reagglomeration gehindert.

In Stufe (3) ist die insgesamt von der Suspension absorbierte Ultraschallenergie von Wichtigkeit. Diese setzt sich zusammen aus:
- der Ultraschalleistung des Bades (P_{**U**})
- der Dauer der Ultraschallbehandlung (t)
- der Geometrie der Anordnung (G) (hierbei ist ein wichtiger Faktor das Verhältnis Oberfläche zu Volumen der Suspension).

Für die absorbierte Energie gilt: E_{**abs**} ≈ P_{**U**} x t x G.

Zum Beispiel werden bei einem Ansatz im 500 ml-Kolben bei einer (geringen) Ultraschalleistung von 25 Watt/ℓ und einer Reaktionszeit von 72 Stunden über 90% aller Agglomerate zerstört. Wird ein Ultraschallbad anderer Leistung verwendet, muß die Reaktionszeit entsprechend angepaßt werden.

Für größere Ansätze und/oder ungünstigere geometrische Faktoren muß die Reaktionszeit ebenfalls angepaßt werden. Zum Beispiel sind für einen 15 ℓ-Ansatz in der Regel etwa 10 Tage Reaktionszeit einzuplanen, um dasselbe Ergebnis wie oben beschrieben zu erzielen.

Eine Kontrolle des Agglomerationsgrades und damit der Produktqualität ist jederzeit optisch (Transparenz der Suspension) oder durch die Bestimmung der Teilchengröße möglich.

Obwohl die Ultraschallbehandlung bei Raumtemperatur durchgeführt werden kann, ist zu berücksichtigen, daß ohne Kühlung allein durch die eingestrahlte Ultraschallenergie eine Erwärmung der Suspension erfolgt. Die Behandlung der Suspension mit Ultraschall (und ohne Kühlung) erfolgt deshalb in der Regel bei erhöhter Temperatur, z.B. bei 50 bis 100°C, insbesondere 60 bis 90°C.

### Stufe (4)

Nach beendeter Zerschlagung der Agglomerate wird das Wasser unter fortgesetzter Ultraschalleinwirkung aus der Suspension entfernt. Diese Entfernung erfolgt destillativ, vorzugsweise bei vermindertem Druck und einer Temperatur von nicht mehr als 80°C. Selbstverständlich ist es nicht erforderlich, das Wasser vollständig (quantitativ) zu entfernen, wobei der Restwassergehalt vorzugsweise 3, insbesondere 1 Gewichts-% der Suspension nicht übersteigt. Diese Entfernung des Wassers ist notwendig, um einen stabilen Überzug der Teilchen durch Polykondensation der Silane auf der Oberfläche derselben zu erhalten.

### Stufe (5)

Da nach der Ultraschallbehandlung in der Regel ein gewisser Prozentsatz an nicht bzw. nicht vollständig zerschlagenen Agglomeraten zurückbleibt, müssen diese Agglomerate zur Herstellung von agglomeratfreien Eisenoxidteilchen entfernt werden. Diese Abtrennung erfolgt vorzugsweise durch Schwerkraft, z.B. durch Zentrifugieren, Dekantieren, Sedimentieren usw. Bevorzugt wird eine Zentrifugation, z.B. für 45 bis 90 Minuten bei 2000 bis 3000 g.

### Stufe (6)

An die obige Abtrennung der noch vorhandenen Agglomerate schließt sich vorzugsweise eine Entfernung der im Verlaufe des Herstellungsverfahrens für das Eisenoxid und/oder der obigen Stufen ins System eingeführten Ionen an. Diese Entfernung, die auch bereits vor der Stufe (5) durchgeführt werden kann (was aber nicht bevorzugt ist), erfolgt in der Regel durch Dialyse, und zwar vorzugsweise gegen entionisiertes Wasser bis zum Erreichen einer Leitfähigkeit von weniger als 2 µS/cm. Es kann jedoch auch gegen andere Flüssigkeiten dialysiert werden, z.B. gegen 0,01-molare Citratlösung (pH = 6,6) oder 0,01-molare Morpholinethansulfonsäure (pH = 6,15).

Wird statt einer nanoskaligen Eisenoxid-Suspension ein Eisenoxid-Pulver gewünscht, ist es selbstverständlich möglich, vorzugsweise nach Abschluß der obigen Stufe (6), die noch vorhandene Flüssigkeit (z.B. Ethylenglycol) zu entfernen, beispielsweise destillativ unter vermindertem Druck. Hierbei sollte die eingesetzte Temperatur nach Möglichkeit 100°C nicht übersteigen, da sonst Partikelwachstum erfolgen kann.

Sollte die nach dem obigen Verfahren erreichte Teilchengrößenverteilung für die beabsichtigte Verwendung (z.B. in der Medizin) noch nicht ausreichend (eng genug) sein, ist es selbstverständlich möglich, durch verschiedene Verfahren die erforderliche Teilchengrößenverteilung zu erzielen. Zu diesen Verfahren zählen beispielsweise fraktionierte Zentrifugation mit einer Ultrazentrifuge, fraktionierte Phasentrennung und HGMS (High Gradient Magnetic Separation).

Die erfindungsgemäß hergestellten Suspensionen zeigen auch über lange Zeiträume hinweg keinerlei Neigung zur Agglomeration der darin enthaltenen nanoskaligen (vorzugsweise superparamagnetischen) Teilchen. Insbesondere sind die auf die Eisenoxidteilchen aufgebrachten Überzüge auch und gerade im Falle der Verwendung von Aminosilanen überraschenderweise gegen Hydrolyse sehr stabil. Diese Stabilitäten wurden insbesondere mit Hilfe der folgenden Verfahren bestimmt.

### (A) Stabilität der Suspensionen:

Über einen Zeitraum von 6 Monaten wurde die Stabilität der Suspensionen verfolgt. Die Suspensionen waren in diesem Zeitraum stabil, d.h. unter dem Einfluß der Schwerkraft (Dekantieren, Zentrifugieren) bildete sich kein Bodensatz.

### (B) Stabilität der Überzüge:

Direkt nach der Herstellung und nach 6 Monaten wurde die Stabilität der Überzüge mit den folgenden Verfahren überprüft.
(a) Flockungsexperimente:
   Zu den Eisenoxid-Suspensionen wurde soviel NaCl-Lösung (3m) gegeben, bis eine deutliche Flockung zu beobachten war. Nach dem Zentrifugieren wurde der Si-Gehalt des Zentrifugats und des Überstandes mit ICP-AES bestimmt. In allen Fällen konnte im Rahmen der Meßgenauigkeit der ICP-AES im Überstand kein Si nachgewiesen werden.
(b) Dünnschichtchromatographie:
Schicht: Kieselgel; Laufmittel: Ethanol; Sprühreagenz: Ninhydrin (Aminogruppen-spezifisch). In keinem Fall konnte eine Wanderung der Aminogruppen beobachtet werden.

Des weiteren wurde mit diesen Methoden die Stabilität der Überzüge bei verschiedenen pH-Werten untersucht und über einen Zeitraum von 2 Wochen beobachtet. Bei pH-Werten unter 2 bzw. über 11 wurde der Beginn der Zersetzung festgestellt. In konzentrierten Säuren und Laugen erfolgte die Hydrolyse innerhalb kürzester Zeit (< 30 min.) Aus der Literatur ist bekannt, daß Eisenoxide in konzentrierten Säuren aufgelöst werden, während in konzentrierten Basen silikatische Bindungen hydrolysiert werden.

Der Zusatz von Salzen, die Einstrahlung von Licht und die Veränderung der Temperatur (0 - 120°C) hatten keinen Einfluß auf die Stabilität der Überzüge.

Da die Eisenoxidteilchen bedingt durch ihre Oberflächenmodifikation mit funktionellen Silanen noch über funktionelle Gruppen an ihrer Oberfläche verfügen (z.B. Amingruppen im Fall von Aminosilanen), ergeben sich vielfältige Möglichkeiten für ihre weitere Verarbeitung bzw. weitere Modifizierung. So können zum Beispiel über Umsetzungen der Aminosilan-modifizierten Eisenteilchen mit Fettsäuren hydrophobe Teilchen hergestellt werden, die sich in unpolaren organischen Lösungsmitteln dispergieren lassen. Weiter können über chemische Bindungen Kronenether, Komplexbildner, Biomoleküle usw. an die funktionellen Gruppen gekoppelt werden.

Nanokompositpartikel können beispielsweise hergestellt werden durch Mischen wäßriger Suspensionen der Eisenoxid-Nanoteilchen mit hydrolysierbaren Verbindungen (z.B. Alkoxiden) von Silicium, Titan, Zirkonium usw. oder entsprechenden Solen und nachfolgende Hydrolyse/Kondensation, wodurch gefüllte glasartige Folien herstellbar sind, bzw. durch Mischen mit monomeren Epoxiden, wobei durch Polymerisation Nanokompositschichten herstellbar sind, oder Mischen mit Alkoxysilanen und Hydrolyse in Wasser-in-Öl-Emulsionen, wodurch partikuläre Nanokomposite herstellbar sind, die beispielsweise zur Separation von Biomolekülen oder zur Separation von toxischen anorganischen und organischen Stoffen eingesetzt werden können.

Weitere Verwendungsmöglichkeiten der erfindungsgemäß hergestellten Produkte sind zum Beispiel:
- für Beschichtungszwecke nach dem Sol-Gel-Prozeß (Glasplatten, Glasfasern, keramische Oberflächen, Metalloberflächen, Pulver (Teilchen mit Core-Shell-Struktur))
- als Precursoren für Sol-Gel-Prozesse
- als Precursoren für Polymerisationsprozesse (abhängig von der funktionellen Gruppe)
- für magnetooptische Anwendungen
- als Sensorwerkstoffe
- als Magnetofluide.

Im folgenden wird die Herstellung der Eisenoxidteilchen beschrieben, die ein bevorzugtes Ausgangsmaterial für das erfindungsgemäße Verfahren darstellen (und zu einem superparamagnetischen Produkt führen) . Diese Herstellung umfaßt die folgenden Stufen in der angegebenen Reihenfolge:
(i) Bereitstellung einer wäßrigen Lösung, die Eisenionen im Verhältnis Fe(II)/Fe(III) im Bereich von 2/1 bis 1/3 enthält;
(ii) Ausfällen von Eisenoxid (bzw. Eisenoxidhydrat) durch Zugabe einer Base bis zum Erreichen eines pH-Wertes von mindestens 8;
(iii) Wärmebehandlung des Eisenoxids bis zum Erreichen einer Sättigungsmagnetisierung von mindestens 40 emu/g;
(iv) Waschen des wärmebehandelten Eisenoxids mit Wasser;
(v) Suspendieren des gewaschenen Eisenoxids in Wasser und Einstellen eines pH der Suspension im Bereich von 4,5 bis 7;
(vi) Behandlung des Eisenoxids mit einem Oxidationsmittel.

Zu den obigen Stufen ist folgendes festzustellen.

### Stufe (i)

Zur Herstellung der wäßrigen Lösung, die Eisen(II)- und Eisen(III)-Ionen enthält, eignen sich prinzipiell alle Eisensalze, die eine derartige wäßrige Lösung liefern können, z.B. die Chloride, Nitrate, Sulfate, Acetate usw. von Fe(II) bzw. Fe(III). Bevorzugt werden die Chloride.

Die Konzentration der Eisenionen in der wäßrigen Lösung kann in einem weiten Bereich schwanken. Vorzugsweise liegt die Konzentration an Eisen(III) im Bereich von 0,01 bis 1, insbesondere 0,1 bis 0,6 Mol pro Liter. Die Konzentration von Eisen(II) hängt bei vorgegebener Eisen(III)-Konzentration vom gewünschten Verhältnis Fe(II)/Fe(III) ab. Über die Konzentration der Eisenionen läßt sich in einem gewissen Maße die Primärteilchengröße steuern, wobei eine höhere Konzentration mit einer kleineren Teilchengröße einhergeht.

Das Verhältnis Fe(II):Fe(III) liegt im Bereich von 2:1 bis 1:3, vorzugsweise von 1,5:1 bis 1:2,5 und insbesondere 1:1 bis 1:2,2. Auch über das Verhältnis von Eisen(II) zu Eisen(III) läßt sich die Primärteilchengröße in gewissem Maße steuern, wobei diese Teilchengröße umso niedriger ist, je höher der Anteil an Eisen(II) ist.

Eine weitere Möglichkeit, in Stufe (i) auf die Primärteilchengröße des auszufällenden Eisenoxid(hydrats) Einfluß zu nehmen, ist die Zugabe von Additiven. Beispiele für derartige Additive sind Polycarbonsäuren (z.B. Oxalsäure) und funktionelle Polycarbonsäuren (z.B. Citronensäure, Weinsäure und Glutaminsäure) sowie Salze derselben, Polyamine (z.B. Ethylendiamin), Polyether (z.B. Polyethylenglycol) und mehrwertige Alkohole (z.B. Glycerin, Polyvinylalkohol usw.). Des weiteren können auch Phosphate, Polyphosphate und funktionelle Phosphate zu diesem Zweck eingesetzt werden. Die Menge dieser Additive kann in einem weiten Bereich variiert werden, z.B. 0,1 bis 40, insbesondere 1 bis 20 Gewichts-% bezüglich dem auszufällenden Eisenoxid. Je höher die Menge an zugegebenem Additiv, desto geringer der mittlere Durchmesser der Eisenoxid-Primärteilchen. Eine Zugabe von Additiven zur Senkung des mittleren Teilchendurchmessers ist jedoch in der Regel nur wünschenswert, wenn Durchmesser von deutlich weniger als 10 nm gewünscht werden.

### Stufe (ii)

In Stufe (ii) erfolgt die Zugabe einer Base bis zum Erreichen eines pH-Wertes von mindestens 8, vorzugsweise im Bereich von 8,5 bis 12,5 und insbesondere im Bereich von 9 bis 11,5, um aus der in Stufe (i) bereitgestellten wäßrigen Eisenionenhaltigen Lösung Eisenoxid auszufällen. Als Base wird vorzugsweise eine anorganische Base wie NaOH, KOH oder Ammoniak eingesetzt, obwohl auch organische Basen wie beispielsweise Amine Verwendung finden können. Besonders bevorzugt ist die Verwendung einer relativ hochkonzentrierten Base, wie beispielsweise konzentrierter Ammoniak oder mindestens 3-molare (vorzugsweise mindestens 5-molare) Natronlauge. Die Zugabegeschwindigkeit der Base hat ebenfalls einen Einfluß auf die Teilchengröße, wobei die Größe der Primärteilchen umso geringer wird, je schneller die Base zugegeben wird. Die Zugabezeit beträgt vorzugsweise 1 bis 40, insbesondere 5 bis 30 und besonders bevorzugt 10 bis 25 Minuten (bei Raumtemperatur).

### Stufe (iii)

Die Wärmebehandlung des ausgefällten Eisenoxids dient der Bildung gut kristallisierter Teilchen. Ein Indiz für die Kristallisation ist die Sättigungsmagnetisierung. Demgemäß sollten die Teilchen bei einer Temperatur und für eine Zeitspanne, die ausreicht, um eine Sättigungsmagnetisierung von mindestens 40, vorzugsweise mindestens 50 emu/g zu erreichen (ohne daß eine Hysterese erkennbar ist), behandelt werden. In der Regel werden Temperaturen von 40 bis 90°C, insbesondere 50 bis 80°C und besonders bevorzugt 60 bis 70°C, und Behandlungszeiten von 5 bis 30 Minuten, insbesondere 10 bis 20 Minuten, eingesetzt. Abhängig von den anderen Verfahrensbedingungen können selbstverständlich auch Temperaturen und Behandlungszeiten außerhalb der oben angegebenen Bereiche eingesetzt werden. Zu bedenken ist hierbei jedoch, daß insbesondere bei Teilchen, die ohne Additivzusatz hergestellt wurden (siehe Stufe (i)), eine Behandlungszeit von mehr als 30 Minuten bei Temperaturen von über 90°C möglicherweise zu einer stärkeren Agglomeration/ Aggregation der Teilchen führt, so daß die spätere Ultraschallbehandlung (Stufe (3) des erfindungsgemäßen Verfahrens) sehr viel länger durchgeführt werden muß und unter Umständen nicht mehr für eine zufriedenstellende Deagglomeration ausreicht.

Andererseits neigt das unter Zusatz von Additiven hergestellte Eisenoxid zur Ausbildung schlecht kristallisierter Teilchen, so daß bei diesen eine intensivere Wärmebehandlung durchaus notwendig sein kann (z.B. 1,5 bis 2,5 Stunden bei 90°C). Die Neigung zu Aggregation wird in diesen Fällen durch die Additive unterdrückt. Bei hohen Additiv-Konzentrationen (bis zu 10 Gewichts-%) und sehr kleinen Primärteilchen (< 4 nm) kann sogar eine hydrothermale Behandlung notwendig werden (z.B. im Autoklaven bei 80 bar, 120 bis 200°C, für 1 - 4 Stunden).

### Stufe (iv)

Nach der Wärmebehandlung (und dem Abkühlen) wird das Eisenoxid mit Wasser gewaschen. Vorzugsweise wird zu diesem Zweck entionisiertes (und entgastes) Wasser eingesetzt. Das Waschen kann beispielsweise durch Dekantieren erfolgen, wobei man die Waschoperation vorzugsweise so oft wiederholt, bis das Waschwasser einen pH von höchstens 10, vorzugsweise einen pH von höchstens 9, zeigt.

### Stufe (v)

Nach dem Waschen wird das Eisenoxid in Wasser aufgeschlämmt und die Aufschlämmung wird auf einen pH-Wert von 4,5 bis 7, vorzugsweise 5,5 bis 6,5, eingestellt. Diese pH-Wert-Einstellung erfolgt durch Zugabe von Säure, z.B. einer (vorzugsweise nicht oxidierenden) Mineralsäure wie beispielsweise HCl. Insbesondere wenn es sich bei dem in Stufe (vi) einzusetzenden Oxidationsmittel um H_{**2**}O_{**2**} handelt, wird jedoch der Einsatz einer organischen Säure, inbesondere von Eisessig, bevorzugt. Andererseits können die Stufen (v) und (vi) kombiniert werden, wenn die in Stufe (v) zum Ansäuern verwendete (oxidierende) Säure mit dem in Stufe (vi) einzusetzenden Oxidationsmittel identisch ist, wie beispielsweise im Fall von Salpetersäure.

### Stufe (vi)

Die Behandlung des wie oben hergestellten und behandelten Eisenoxids mit einem Oxidationsmittel dient der Aktivierung des Eisenoxids. Ein für diesen Zweck bevorzugtes Oxidationsmittel ist H_{**2**}O_{**2**} (z.B. in Form einer 30 gewichtsprozentigen wäßrigen Lösung). Vorzugsweise wird in diesem Fall der Eisenoxid-Suspension soviel Wasserstoffperoxid zugesetzt, bis eine Konzentration des Peroxids in der Suspension von 1 bis 5, insbesondere 2 bis 4 Gewichtsprozent erreicht ist. In diesem Fall wird solange bei Raumtemperatur gerührt, bis die Gasentwicklung aufgehört hat. Das Oxidationsmittel ist jedoch nicht auf Wasserstoffperoxid beschränkt. Andere mögliche Oxidationsmittel sind beispielsweise Salpetersäure (bei einer Konzentration von 2 m werden für die Oxidation bei Raumtemperatur etwa 10 Minuten benötigt), Eisen(III)nitrat (bei einer Konzentration von 0,5 m werden für die Oxidation bei 80°C ca. 30 Minuten benötigt) und Kaliumiodat (bei einer Konzentration von 0,2 m werden für die Oxidation bei Raumtemperatur ca. 30 Minuten benötigt).

Das folgende Beispiel dient der weiteren Veranschaulichung der vorliegenden Erfindung.

### BEISPIEL

### (A) Synthese der Eisenoxidteilchen:

Eine Lösung von 0,23 Mol FeCl_{**2**} und 0,46 Mol FeCl_{**3**} in 1 ℓ Wasser wird mit Stickstoff entgast. Darauf wird innerhalb von 20 Minuten soviel Natronlauge (5-molar) zugesetzt, daß ein pH von 11,5 erreicht wird. Der resultierende Niederschlag wird 10 Minuten auf 65°C erhitzt und anschließend innerhalb von 5 Minuten auf Raumtemperatur abgekühlt. Daraufhin wird der Niederschlag solange mit entionisiertem und entgastem Wasser gewaschen, bis der pH der Waschlösung 9 erreicht hat. Der Niederschlag wird in Wasser suspendiert und die Suspension wird mit Eisessig auf pH 6 eingestellt. Zu der resultierenden Suspension werden 10 Volumen-% einer 30 gewichtsprozentigen wäßrigen H_{**2**}O_{**2**}-Lösung gegeben und anschließend wird bis zur Beendigung der Gasentwicklung gerührt, worauf die Suspension mit Wasser auf einen Feststoffgehalt von 5 Gewichts-% Eisenoxid verdünnt wird.

### (B) Oberflächenmodifizierung

Zur obigen Suspension werden 7,5 Volumen-% Eisessig gegeben, gefolgt von der Zugabe von 80 Gewichts-% (bezüglich Eisenoxid) Aminopropyltriethoxysilan. Daraufhin wird der Mischung das 1,3-fache Volumen an Ethylenglycol zugegeben. Die resultierende Suspension wird 3 Tage bei 80°C im Ultraschallbad behandelt (Leistung des Ultraschallbades 25 Watt/ℓ) . Danach wird im Ultraschallbad das Wasser am Rotationsverdampfer bei 50°C unter reduziertem Druck abgezogen. Daran schließt sich eine Zentrifugation der Glycolsuspension (60 Minuten bei 2500 g) und eine nachfolgende Dialyse gegen entionisiertes Wasser bis zum Erreichen einer Leitfähigkeit von weniger als 2 µS/cm an.

### (C) Charakterisierung der erhaltenen Eisenoxidteilchen

Teilchengröße:
UPA (Ultrafine Particle Analyzer oder allgemein "laser light back scattering"): d_{**50**}:10 nm
Scheibenzentrifuge: d_{**50**}:10 nm
TEM (Transmissionselektronenmikroskop): ca. 10 nm (Primärpartikelgröße)

Die Auswertung der Partikelgrößenverteilung (UPA) ergibt, daß 80% aller Teilchen im Bereich von +/- 20% des mittleren Teilchendurchmessers liegen, was für die meisten Anwendungen ausreichend ist.
- Elementaranalyse:: C: 1,0 - 1,6 Gewichts-%
Si: 0,4 - 0,6 Gewichts-%
- Oberflächenanalyse:: Isoelektrischer Punkt: pH = 8,8 - 9,6 (Zetapotentialtitration)

## Patentansprüche

1. Verfahren zur Herstellung einer agglomeratfreien Suspension von stabil beschichteten nanoskaligen Eisenoxidteilchen, umfassend die folgenden Stufen in der angegebenen Reihenfolge:
(1) Bereitstellung einer wäßrigen Suspension von nanoskaligen Eisenoxidteilchen, die teilweise oder vollständig in Form von Agglomeraten vorliegen;
(2) Zugabe (i) eines Trialkoxysilans, das über eine direkt an Si gebundene Kohlenwasserstoffgruppe verfügt, an die mindestens eine Amino-, Carboxyl-, Epoxy-, Mercapto-, Cyano-, Hydroxy- und/oder (Meth)acrylgruppe gebunden ist, und (ii) eines mit Wasser mischbaren polaren organischen Lösungsmittels, dessen Siedepunkt mindestens 10°C höher ist als derjenige von Wasser;
(3) Behandlung der resultierenden Suspension mit Ultraschall, bis mindestens 70% der vorhandenen Teilchen im Bereich ± 20% des mittleren Teilchendurchmessers liegen;
(4) destillative Entfernung des Wassers unter Ultraschalleinwirkung; und
(5) Abtrennung der nicht aufgebrochenen Agglomerate.

2. Verfahren nach Anspruch 1, in welchem nach Stufe (5) als Stufe (6) eine Entfernung von Ionen aus der Suspension erfolgt, vorzugsweise durch Dialyse.

3. Verfahren nach irgendeinem der Ansprüche 1 und 2, in welchem die Eisenoxidteilchen Eisen und 0 bis 70, vorzugsweise 0 bis 35 Metallatom-% mindestens eines Metalls aus der Gruppe Zn, Cu, Co, Ni und Mn enthalten.

4. Verfahren nach irgendeinem der Ansprüche 1 bis 3, in welchem die Eisenoxidteilchen reine Eisenoxidteilchen sind, in denen das Verhältnis Fe(II)/Fe(III) vorzugsweise 1/1 bis 1/3 beträgt.

5. Verfahren nach irgendeinem der Ansprüche 1 bis 4, in welchem in Stufe (2) ein Trialkoxysilan mit mindestens einer Aminogruppe eingesetzt wird.

6. Verfahren nach irgendeinem der Ansprüche 1 bis 5, in welchem in Stufe (2) das polare organische Lösungsmittel über mindestens eine, vorzugsweise mindestens zwei Hydroxygruppen verfügt.

7. Verfahren nach Anspruch 6, in welchem das polare organische Lösungsmittel aus Ethylenglycol, Propylenglycol, Glycerin, Trimethylolpropan, Diethylenglycol oder Mischungen derselben ausgewählt wird.

8. Verfahren nach irgendeinem der Ansprüche 1 bis 7, in welchem Stufe (3) bei einer Temperatur von 50 bis 100°C durchgeführt wird.

9. Verfahren nach irgendeinem der Ansprüche 1 bis 8, in welchem in Stufe (4) verminderter Druck und eine Temperatur von nicht mehr als 80°C eingesetzt werden.

10. Verfahren nach irgendeinem der Ansprüche 1 bis 9, in welchem in Stufe (5) die Abtrennung durch Schwerkraft, vorzugsweise durch Zentrifugation, erfolgt.

11. Verfahren zur Herstellung von agglomeratfreien stabil beschichteten nanoskaligen Eisenoxidteilchen, in welchem nach der Durchführung des Verfahrens gemäß irgendeinem der Ansprüche 1 bis 10 das flüssige Medium der Suspension entfernt wird.

12. Verfahren nach irgendeinem der Ansprüche 1 bis 11, in welchem stabil beschichtete superparamagnetische Eisenoxidteilchen oder Suspensionen derselben hergestellt werden.

13. Agglomeratfreie stabil beschichtete nanoskalige Eisenoxidteilchen oder Suspensionen derselben, erhältlich gemäß dem Verfahren nach irgendeinem der Ansprüche 1 bis 12.

14. Agglomeratfreie nanoskalige Eisenoxidteilchen, versehen mit einem hydrolysestabilen Überzug auf Aminosilan-Basis.

## Claims

1. A process for producing an agglomerate-free suspension of stably coated nanoscale iron oxide particles, comprising the following steps in the order indicated:
(1) preparation of an aqueous suspension of nanoscale iron oxide particles which are partly or completely present in the form of agglomerates;
(2) addition (i) of a trialkoxysilane which has a hydrocarbon group which is directly bound to Si and to which at least one amino, carboxyl, epoxy, mercapto, cyano, hydroxy and/or (meth)acrylic group is bound, and (ii) of a water-miscible polar organic solvent whose boiling point is at least 10°C above that of water;
(3) ultrasonic treatment of the resulting suspension until at least 70% of the particles present have a size within the range from 20% below to 20% above the mean particle diameter;
(4) removal of the water by distillation under the action of ultrasound; and
(5) removal of the agglomerates which have not been broken up.

2. A process according to Claim 1, wherein, as step (6), removal of ions from the suspension is carried out after step (5), preferably by dialysis.

3. A process according to Claim 1 or 2, wherein the iron oxide particles contain iron and from 0 to 70 metal atom %, preferably from 0 to 35 metal atom %, of at least one metal selected from Zn, Cu, Co, Ni and Mn.

4. A process according to any of Claims 1 to 3, wherein the iron oxide particles are pure iron oxide particles in which the Fe(II)/Fe(III) ratio is preferably from 1/1 to 1/3.

5. A process according to any of Claims 1 to 4, wherein a trialkoxysilane having at least one amino group is used in step (2).

6. A process according to any of Claims 1 to 5, wherein the polar organic solvent in step (2) has at least one, preferably at least two, hydroxyl groups.

7. Process according to Claim 6, wherein the polar organic solvent is selected from ethylene glycol, propylene glycol, glycerol, trimethylolpropane, diethylene glycol and mixtures thereof.

8. A process according to any of Claims 1 to 7, wherein step (3) is carried out at a temperature of from 50 to 100°C.

9. A process according to any of Claims 1 to 8, wherein reduced pressure and a temperature of not more than 80°C are used in step (4).

10. A process according to any of Claims 1 to 9, wherein the separation in step (5) is carried out by means of gravity, preferably by centrifugation.

11. A process for producing agglomerate-free stably coated nanoscale iron oxide particles, wherein the liquid medium is removed from the suspension after carrying out the process according to any of Claims 1 to 10.

12. A process according to any of Claims 1 to 11, wherein stably coated superparamagnetic iron oxide particles or suspensions thereof are produced.

13. Agglomerate-free stably coated nanoscale iron oxide particles or suspensions thereof, obtainable by the process according to any of Claims 1 to 12.

14. Agglomerate-free nanoscale iron oxide particles provided with a hydrolysis-resistant coating based on aminosilane.

## Revendications

1. Procédé de fabrication d'une suspension de particules d'oxyde de fer nanométriques à revêtement stable, exempte d'agglomérats, lequel procédé comprend les étapes suivantes dans l'ordre suivant :
(1) préparation d'une suspension aqueuse de particules d'oxyde de fer nanométriques dont une partie ou la totalité sont présentes sous forme d'agglomérats,
(2) addition (i) d'un trialcoxysilane comportant un groupe hydrocarboné lié directement à un atome de silicium, et portant au moins un groupe amino, carboxyle, époxy, mercapto, cyano, hydroxy et/ou (méth)acryloyle, et (ii) d'un solvant organique polaire miscible à l'eau, ayant un point d'ébullition supérieur d'au moins 10 °C à celui de l'eau,
(3) traitement de la suspension obtenue par des ultrasons, jusqu'à ce qu'au moins 70 % des particules présentes aient un diamètre compris dans la fourchette définie par diamètre moyen ± 20 %,
(4) élimination de l'eau par distillation sous l'action d'ultrasons,
(5) séparation des agglomérats non cassés.

2. Procédé selon la revendication 1, dans lequel on fait suivre l'étape (5) par une étape (6) consistant en une désionisation de la suspension, de préférence par dialyse.

3. Procédé selon l'une quelconque des revendications 1 et 2, dans lequel les particules d'oxyde de fer contiennent du fer et de 0 à 70 %, de préférence de 0 à 35 %, rapporté au nombre d'atomes métalliques, d'au moins un métal choisi dans le groupe formé par Zn, Cu, Co, Ni et Mn.

4. Procédé selon l'une quelconque des revendications 1 à 3, dans lequel les particules d'oxyde de fer sont des particules d'oxyde de fer pur, dans lesquelles le rapport Fe(II)/Fe(III) est compris de préférence entre 1/1 et 1/3.

5. Procédé selon l'une quelconque des revendications 1 à 4, dans lequel on utilise, dans l'étape (2), un trialcoxysilane comportant au moins un groupe amino.

6. Procédé selon l'une quelconque des revendications 1 à 5, dans lequel le solvant organique polaire utilisé dans l'étape (2) dispose d'au moins un, et de préférence d'au moins deux groupes hydroxyle.

7. Procédé selon la revendication 6, dans lequel le solvant organique polaire est choisi dans le groupe formé par l'éthylèneglycol, le propylèneglycol, le glycérol, le triméthylolpropane, le diéthylèneglycol ou des mélanges de ceux-ci.

8. Procédé selon l'une quelconque des revendications 1 à 7, dans lequel l'étape (3) est réalisée à une température comprise entre 50 et 100 °C.

9. Procédé selon l'une quelconque des revendications 1 à 8, dans lequel l'étape (4) est réalisée à une pression réduite et à une température n'excédant pas 80 °C.

10. Procédé selon l'une quelconque des revendications 1 à 9, dans lequel la séparation dans l'étape (5) se fait par gravité, de préférence par centrifugation.

11. Procédé de fabrication de particules d'oxyde de fer nanométriques portant un revêtement stable et exemptes d'agglomérats, dans lequel, après réalisation du procédé selon l'une quelconque des revendications 1 à 10, on élimine le milieu liquide de la suspension.

12. Procédé selon l'une quelconque des revendications 1 à 11, dans lequel on prépare des particules d'oxyde de fer superparamagnétiques portant un revêtement stable ou une suspension de telles particules.

13. Particules d'oxyde de fer nanométriques portant un revêtement stable et exemptes d'agglomérats ou une suspension de telles particules, que l'on peut obtenir par un procédé selon l'une quelconque des revendications 1 à 12.

14. Particules d'oxyde de fer nanométriques exemptes d'agglomérats, pourvues d'un revêtement résistant à l'hydrolyse à base d'aminosilanes.
